# EUROPÄISCHE PATENTSCHRIFT

(11) **EP 1 894 888 B1**
(45) Veröffentlichungstag und Bekanntmachung des Hinweises auf die Patenterteilung: **29.06.2011**
(21) Anmeldenummer: 07114480.2
(22) Anmeldetag: 17.08.2007
(51) Int. Cl.: C01B 33/12, C01B 33/141, C01B 33/18, C09C 1/30, C09C 1/68

(54) **Kationisch stabilisierte wässrige Silicadispersion, Verfahren zu deren Herstellung und deren Verwendung.**
Cationically stabilized aqueons silica dispersions, method for manufacture and use thereof.
Dispersion aquese de silice stabilisée de manière cationique, procédé de sa fabrication er son utilisation.

(30) Priorität: 01.09.2006 DE 102006041299; 13.03.2007 DE 102007012578
(43) Veröffentlichungstag der Anmeldung: 05.03.2008
(73) Patentinhaber: Bühler Partec GmbH, 66123 Saarbrücken (DE)
(72) Erfinder: Steingröver, Klaus, 66125, Saarbrücken (DE); Tabellion, Frank, 66121, Saarbrücken (DE); Pilotek, Steffen, 66111, Saarbrücken (DE)
(74) Vertreter: Wilming, Martin

(56) Entgegenhaltungen:
- EP-A- 1 559 750
- EP-A- 1 577 351
- US-A1- 2005 020 699

## Beschreibung

Die Erfindung betrifft eine kationisch stabilisierte wässrige Silicadispersion, ein Verfahren zu deren Herstellung und deren Verwendung.

Wässrige Silicadispersionen werden im grossen Umfang in der Industrie verwendet. Beispielsweise finden sie Verwendung in Streichfarben auf Papier, Folien und anderen Druckmedien, als Beschichtungen auf Untergründen wie Holz, Kunststoff, Metall, Textilien, Folien zur Verbesserung der mechanischen und optischen Eigenschaften der Beschichtung, in Beschichtungen auf Folien zur besseren Trennbarkeit oder in Schleif-und Poliermitteln zur Bearbeitung von Oberflächen wie Keramiken, Gläsern, Glaskeramiken und Halbleiterwafern in der Produktion von elektronischen Bauteilen.

Der isoelektrische Punkt (IEP) von SiO₂ liegt bei pH 2. Daher liegen SiO₂ Partikel in wässriger Suspension bei einem pH Wert von über 2 negativ geladen und damit anionisch stabilisiert vor. Zur Herstellung von stabilen Produkten, die Silica enthalten, ist es erforderlich, dass die Ladung der Silica-Dispersion dasselbe Vorzeichen wie die anderen Komponenten des Produkts aufweist, andernfalls können keine stabilen Endprodukte erhalten werden. Daher ist der Einsatz von anionisch stabilisiertem Silica in Produkten mit kationisch geladenen Komponenten nicht möglich.

Neben der nötigen Stabilität der Zusammensetzung gibt es weitere Gründe, kationische Dispersionen einzusetzen, z.B. wenn das herzustellende Produkt kationische Gruppen enthalten soll. So wird z.B. bei Druckmedien gefordert, dass die gewöhnlich anionischen Farbstoffe auf einem kationischen porösen Druckträger fixiert werden, wodurch u.a. Wasserfestigkeit und hohe Brillanz erreicht werden. Ferner gibt es Anwendungen, bei denen ein Mittel auf Substraten abgeschieden werden soll. Bei negativ geladenen Substraten eigenen sich für die Abscheidung naturgemäss kationische Mittel. So gibt es Textilbehandlungsmitteln, bei denen kationische Substanzen auf anionisch geladenen Fasern haften (Weichspüler). Auch Glas und Keramikoberflächen, wie glasierte Keramikoberflächen, sind negativ geladen. Häufig ist die Verträglichkeit mit dem Bindemittel ein Problem. Versuche zeigten, dass die Zugabe von unmodifiziertem Aerosil zu PVA zu einem starken Viskositätsanstieg führt.

Dagegen liegen andere Metalloxidpartikel, wie z.B. aus Ti oder Al, in wässriger Suspension kationisch stabilisiert vor und können daher problemlos in kationischen Produkten eingesetzt werden. Der Preis dieser Metalloxide ist jedoch deutlich höher als der von SiO₂. Da wie vorstehend erläutert gewöhnliche Silicadispersionen nicht in Produkten mit kationisch geladenen Komponenten eingesetzt werden können, ist eine Modifizierung von SiO₂ von Interesse, die den Einsatz von SiO₂ in Produkten mit kationisch geladenen Komponenten ermöglicht.

DE-T2-60106258 beschreibt die Verwendung von in der Gasphase hydrolytisch hergestellten Partikeln wie TiO₂, Al₂O₃, SiO₂ zur Herstellung einer Tintenempfangsschicht, ohne dass eine Behandlung der Partikel beschrieben wird. In der DE-A-10311722 wird die Herstellung einer kationisch stabilisierten Silicadispersion durch Verwendung von SiO₂-Partikeln, die Bor enthalten, beschrieben.

DE-A-10033054 beschreibt die Stabilisierung einer Silicadispersion mit Hilfe von kationischen organischen Polymeren. US-A-6777039 beschreibt die Herstellung einer Beschichtung für ein Tintenstrahldruckmedium durch die Zugabe einer wässrigen Lösung von Polyvinylalkohol, einem organischen Lösungsmittel und einem Tensid zu einer Dispersion aus Silica und einem kationischen Polymer. US-A-6417264 beschreibt eine Dispersion aus Silica, das mit einem organischen kationischen Polymer in einem polaren Lösungsmittel dispergiert ist. US-A-6420039 beschreibt eine kationische Silica-dispersion, bei der SiO₂-Partikel mit einer Aluminiumverbindung in Verbindung gebracht werden, um eine Stabilisierung zu erreichen.

EP-A2-1559750 beschreibt die Herstellung einer kationisch stabilisierten Silica-dispersion in einem mehrstufigen Verfahren, bei dem in einem ersten Schritt eine wässrige SiO₂-Dispersion mit einem aktivierenden Reagens wie Aluminiumchloridhydrat umgepolt wird und das mit Al-haltigen Material modifizierte Reaktionsprodukt in einem weiteren Schritt mit Organosilanen behandelt wird. In dieser Druckschrift wird als Gegenbeispiel auch eine direkte Zugabe on Aminosilan zu einer wässrigen Lösung von vSilica ohne vorherige Behandlung mit dem aktivierenden Reagenz beschrieben. Nach dem dort beschriebenen Verfahren erfolgt aber eine sofortige Gelierung der Silicadispersion bei Zugabe von Aminosilan, so dass nach diesem Verfahren keine Stabilisierung von Silicateilchen möglich ist.

Die Aufgabe der vorliegenden Erfindung bestand darin, kationisch stabilisiertes Silica in einem einfachen und damit kostengünstigen Verfahren unter Verwendung von möglichst wenig zusätzlichen Reagenzien bereitzustellen, die überdies eine verbesserte Stabilität aufweisen.

Die Aufgabe konnte überraschenderweise durch direkte Modifikation von Silica mit Aminosilanen erreicht werden, wodurch auf einfache Weise hoch stabile Dispersionen mit einem Minimum an zusätzlichen Reagenzien erhalten werden konnten.

Demgemäss stellt die vorliegende Erfindung ein Verfahren zur Herstellung von kationisch stabilisiertem Silica in Form einer wässrigen Dispersion bereit, bei dem a) ein oder mehrere Aminosilane mit einer Säure gemischt werden, um eine saure Aminosilan-Lösung zu erhalten, und b) Silica in Form einer wässrigen Dispersion oder eines Pulvers durch Mischen mit der sauren Aminosilan-Lösung umgesetzt wird, um eine kationisch stabilisierte wässrige Silicadispersion zu erhalten.

Auf diese Weise lassen sich in einfacher Weise hoch stabile Dispersionen mit einem Minimum an zusätzlichen Reagenzien erhalten. Darüber hinaus wurde überraschenderweise festgestellt, dass kationisch stabilisierte Silicadispersionen mit einer sehr geringen Viskosität erhalten wurden, deren Viskosität sogar bei Zusatz von organischen Bindemitteln nur unwesentlich erhöht wird. Im folgenden wird die Erfindung im Einzelnen beschrieben.

In dem Verfahren wird Silica in Form von Pulver oder in Form einer wässrigen Dispersion eingesetzt. Das Silica liegt insbesondere in Form von Teilchen vor. Silica ist gegebenenfalls hydratisiertes SiO₂. Silica kommt in vielen verschiedenen Formen vor und wird allgemein auch als Siliciumoxid bzw. Siliciumdioxid oder Kieselsäure bezeichnet, wobei diese Bezeichnungen hier untereinander austauschbar verwendet werden. Das Silica kann amorph und/oder ganz oder teilweise kristallin sein. Es kann als Pulver oder in Form einer wässrigen Dispersion bzw. eines wässrigen Sols (kolloidales SiO₂), die auch als Kieselsole bezeichnet werden, verwendet werden.

Silica ist ein allgemein bekanntes Handelsprodukt, dessen Eigenschaften, wie z.B. Teilchengrösse, Agglomeratzustand, Kristallinitätsgrad, spezifische Oberfläche, Porosität usw. je nach Herstellungsart variieren können. Alle diese Formen sind von der vorliegenden Erfindung umfasst. Eine Übersicht über die verschieden Arten von Silica bzw. Siliciumdioxid oder Kieselsäure und deren Herstellung findet sich z.B. in Ullmanns, Encyclopädie der technischen Chemie, 4. Aufl., 1982, Bd. 21, S. 439-476. Unter Silica werden hier auch solche Teilchen verstanden, die eine Oberflächenschicht bzw. Schale aus Silica und einen Kern aus einem anderen Material, insbesondere einem Metalloxid, aufweisen. Da die Oberfläche aus Silica besteht, verhalten sich solche Teilchen bezüglich der hier relevanten Stabilisierung im wesentlichen genauso wie Teilchen, die nur aus Silica bestehen.

Die eingesetzten SiO₂-Teilchen können z.B. eine BET-Oberfläche (gemessen mit Stickstoff) im Bereich von 5 bis 1.000 m²/g, bevorzugt 50 bis 500 m²/g und bevorzugter 100 bis 400 m²/g aufweisen.

Beispiele für Silica, die in der vorliegenden Erfindung bevorzugt eingesetzt werden, sind pyrogenes SiO₂, insbesondere flammpyrolytisch hergestelltes SiO₂, gefälltes SiO₂ und Kern-Schale-Teilchen aus einer Silica-Schale und einem Kern aus Metalloxid, d.h. Metalloxid-Partikel mit einer Oberflächenbeschichtung aus SiO₂. Geeignete Handelsprodukte für pyrogene Kieselsäuren sind z.B. die Aerosile^{®} von Degussa, wie Aerosil^{®} 200, die HDK-Produkte von Wacker, wie HDK S13, oder die Cab-O-Sil^{®}-Produkte von Cabot, wie Cab-O-Sil^{®} H5. Die eingesetzten pyrogenen Kieselsäuren weisen bevorzugt eine BET-Oberfläche (gemessen mit Stickstoff) im Bereich von 5 bis 600 m²/g, bevorzugter 50 bis 400 m²/g, auf. Geeignete Handelsprodukte für Fällungskieselsäure sind z.B. die Sipernat^{®}-Produkte von Degussa, wie Sipernat^{®} 310 oder Sipernat^{®} 304. Die eingesetzten gefällten Kieselsäuren weisen bevorzugt eine BET-Oberfläche (gemessen unter Stickstoff) im Bereich von 50 bis 1000 m²/g, bevorzugter 100 bis 800 m²/g, auf.

Bei dem Metall für die Metalloxid-Partikel mit einer Oberflächenbeschichtung von SiO₂ (Kern-Schale-Teilchen) kann es sich um jedes beliebige Metall handeln, z.B. enthält der Kern Al₂O₃, ZrO₂, Eisenoxid oder TiO₂. Beispiele für Kern-Schale Partikel sind magnetisches Eisenoxid in Silica-Matrix, wie z.B. MagSilica^{®} von Degussa, SiO₂ beschichtete ZnO-Partikel, wie z.B. in DE-A-10118309 beschrieben, und andere mit SiO₂ beschichtete Metalloxid-Teilchen, z.B. TiO₂-Teilchen, z.B. durch Beschichtung von Partikeln eines Metalloxid-Sols, z.B. TiO₂, durch hydrolysiertes Siliciumalkoholat, z.B. TEOS, wie z.B. beschrieben in DE-A-102004030093.

Bei dem Silica kann es sich auch um Mischoxide bzw. um dotiertes Silica mit mindestens 75% Silica-Anteil handeln. Mischoxide oder dotiertes Silica sind Mischungen auf molekularer Ebene, die in jedem Primärpartikel neben Sauerstoff und Silizium mindestens eine weitere Atomsorte aufweisen. Sie werden üblicherweise bereits im Herstellungsprozess, z.B. im Aerosilprozess, als Mischungen hergestellt. Beispiele solcher Mischoxide sind Systeme aus SiO₂ mit Hauptgruppenoxiden, wie z.B. den Oxiden von Natrium, Bor, Aluminium oder Phosphor, oder aber Systeme aus SiO₂ mit Nebengruppenoxiden einschliesslich der Lanthaniden wie z.B. Ti, Zr, V, Mo, W, Mn, Fe, Ru, Co, Ni, Rh, Pd, Pt, Ce sowie weiteren Lanthaniden oder Kombinationen daraus. Beispiele für kommerziell erhältliche Mischoxide sind z.B. MOX 80 und MOX 170 von der Degussa (Mischoxid SiO₂-Al₂O₃).

Als Silica ist auch kolloidales Silica geeignet, z.B. können übliche Kieselsole verwendet werden. Kieselsole sind im Handel erhältlich oder können durch dem Fachmann bekannte Verfahren hergestellt werden.

Die Silicateilchen können in Form eines Pulvers oder als Dispersion verwendet werden. Bei Einsatz einer Dispersion wird ein wässriges Dispersionsmedium verwendet, d.h. die flüssige Phase enthält Wasser, wobei es vorzugsweise die Hauptkomponente ist. Sofern neben Wasser ein zusätzliches Lösungsmittel eingesetzt wird, kann der Volumenanteil Wasser mit der Wassermischbarkeit und der damit verbundenen Polarität der anderen Lösemittelkomponente schwanken. Im allgemeinen sind mindestens 20 Vol.-% des gesamten Lösungsmittels Wasser, bevorzugt mindestens 30 Vol.-% und besonders bevorzugt mindestens 50 Vol.-%. Bevorzugt wird Wasser als alleiniges Dispersionsmedium verwendet.

Bei dem neben Wasser gegebenenfalls eingesetzten weiteren Lösungsmittel kann es sich um ein oder mehrere weitere organische Lösungsmittel handeln, die in der Regel in geringeren Anteilen z.B. als Colösungsmittel zugesetzt werden. Als zusätzliches organisches Lösungsmittel bzw. Dispergiermittel eignen sich sowohl polare als auch unpolare und aprotische Lösungsmittel. Beispiele hierfür sind Alkohole, wie z.B. aliphatische und alicyclische Alkohole mit 1 bis 8 Kohlenstoffatomen (insbesondere Methanol, Ethanol, n-und i-Propanol, Butanol, Octanol, Cyclohexanol), Ketone, wie z.B. aliphatische und alicyclische Ketone mit 1 bis 8 Kohlenstoffatomen (insbesondere Aceton, Butanon und Cyclohexanon), Ester, wie z.B. Essigsäureethylester und Glycolester, Ether, wie z.B. Diethylether, Dibutylether, Anisol, Dioxan, Tetrahydrofuran und Tetrahydropyran, Glycolether, wie Mono-, Di-, Tri- und Polyglycolether, Glycole, wie Ethylenglycol, Diethylenglycol und Propylenglycol, Amide und andere Stickstoffverbindungen, wie z.B. Dimethylacetamid, Dimethylformamid, Pyridin, N-Methylpyrrolidin und Acetonitril, Sulfoxide und Sulfone, wie z.B. Sulfolan und Dimethylsulfoxid, oder Nitroverbindungen, wie Nitrobenzol.

In dem erfindungsgemässen Verfahren wird als weitere Komponente eine saure Aminosilan-Lösung eingesetzt, d.h. der pH-Wert der Lösung ist kleiner als 7. Durch die Säure wird das Aminosilan aktiviert. Bevorzugt liegt der pH-Wert der Aminosilan-Lösung im Bereich von 2 bis 6. Es ist ferner bevorzugt, dass es sich um eine wässrige saure Aminosilan-Lösung handelt. Zur Herstellung der sauren Aminosilan-Lösung werden ein oder mehrere Aminosilane mit einer Säure vermischt. Sowohl das Aminosilan als auch die Säure können in einem Lösungsmittel gelöst sein, was für beide Komponenten auch bevorzugt ist. In einer weiteren bevorzugten Ausführungsform wird die Aminosilan-Lösung durch Mischen von unverdünntem Aminosilan mit der wässrigen Säure erhalten. Beispiele für Lösungsmittel sind Wasser und organische Lösungsmittel, wobei jeweils Wasser oder ein wässriges Lösungsmittel, d.h. ein Lösungsmittelgemisch mit überwiegendem Anteil von Wasser, bevorzugt sind. Für Beispiele für einsetzbare organische Lösungsmittel und die möglichen Volumenanteile von Wasser im Lösungsmittelgemischen wird auf die vorstehend genannten Beispiele für die Silicadispersion verwiesen.

Aminosilane sind dem Fachmann allgemein bekannt. Es können ein Aminosilan oder eine Mischung von zwei oder mehr Aminosilanen verwendet werden. Es handelt sich dabei insbesondere um hydrolysierbare oder hydrolysierte Aminosilane. Dabei handelt sich um Siliciumverbindungen, die am Si-Atom mindestens eine hydrolysierbare oder bereits hydrolysierte Gruppe, d.h. Hydroxy, und mindestens eine nicht hydrolysierbare Gruppe, die mindestens eine Aminogruppe umfasst, aufweist. Eine Aminogruppe enthält ein basisches N-Atom, das gegebenenfalls substituiert ist. Es kann sich um eine primäre, sekundäre oder tertiäre Aminogruppe handeln.

Beispielsweise haben die eingesetzten Aminosilane die allgemeine Formel

RₐSiX₍₄₋ₐ₎

worin die Reste X gleich oder verschieden sind und hydrolysierbare Gruppen oder Hydroxygruppen bedeuten, die Reste R gleich oder verschieden sind und nicht hydrolysierbare Gruppen darstellen, wobei mindestens ein Rest R mindestens eine Aminogruppe umfasst, und a den Wert 1, 2 oder 3, bevorzugt 1 oder 2, hat.

In der allgemeinen Formel ist X eine Hydroxygruppe oder eine hydrolysierbare Gruppe, die gleich oder voneinander verschieden sein können, z.B. Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), -N(H)-Si(R₃) (Silazan, wobei R wie nachstehend definiert ist), Amino, Monoalkylamino oder Dialkylamino mit vorzugsweise 1 bis 12, insbesondere 1 bis 6 Kohlenstoffatomen. X kann auch eine Siloxygruppe sein, z.B. -OSiY₃, wobei Y gleich oder verschieden eine der vorstehend definierten Gruppen für X sein kann. Bevorzugte hydrolysierbare Reste sind Halogen, Alkoxygruppen und Acyloxygruppen. Besonders bevorzugte hydrolysierbare Reste sind C₁₋₄-Alkoxygruppen, insbesondere Methoxy und Ethoxy.

Bei den nicht hydrolysierbaren Resten R, die gleich oder voneinander verschieden sein können, weist mindestens ein Rest R mindestens eine Aminogruppe auf. Bevorzugt liegt ein nicht hydrolysierbarer Rest mit mindestens einer Aminogruppe vor. Die Reste R können gegebenenfalls einen oder mehrere übliche Substituenten, wie z.B. Alkyl, Halogen oder Alkoxy, aufweisen.

Beispiele für nicht hydrolysierbare Reste R ohne Aminogruppe sind Alkyl (vorzugsweise C₁₋₁₆-Alkyl, wie Methyl, Ethyl, n-Propyl, Isopropyl, n-Butyl, sek.-Butyl und tert.-Butyl, Pentyl, Hexyl, Octyl oder Undecyl), Cycloalkyl (vorzugsweise C₄₋₁₂-Cycloalkyl, wie Cyclopentyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl), Aryl (vorzugsweise C₆₋₁₀-Aryl, wie z.B. Phenyl und Naphthyl) sowie entsprechende Alkaryle und Aralkyle, die bevorzugt 7 bis 24 C-Atome enthalten (z.B. Tolyl, Benzyl und Phenethyl). Bevorzugt sind Alkylreste.

Bei dem nicht hydrolysierbaren Rest R mit mindestens einer Aminogruppe kann die Aminogruppe endständig, seitenständig und/oder in der Hauptkette des Rests enthalten sein. Der Rest R kann auch zwei oder mehr Aminogruppen aufweisen. Die Aminogruppen im Rest R sind über Alkylen-, Alkenylen- oder Arylen-Brückengruppen, die durch Sauerstoffatome unterbrochen sein können, an das Siliciumatom gebunden. Die genannten zweiwertigen Brückengruppen leiten sich z.B. von den oben genannten einwertigen Alkyl-, Cycloalkyl-, Alkenyl-, Aryl-, Alkaryl- oder Aralkylresten ab. Die Brückengruppen enthalten in der Regel 1 bis 18, vorzugsweise 1 bis 12 und insbesondere 1 bis 6 Kohlenstoffatome. Sofern Aminogruppen in der Hauptkette enthalten sind, können zwei oder mehr solcher Brückengruppen enthalten sein.

Das N-Atom der Aminogruppe kann substituiert sein oder nicht. Bei der oder den Aminogruppen des Restes R kann es sich um primäre, sekundäre oder tertiäre Aminogruppen -NR¹₂ bei endständigen oder seitenständigen Aminogruppen oder -NR¹- bei Aminogruppen in der Hauptkette oder einer Seitenkette handeln, wobei die Gruppen R¹ gleich oder verschieden sind und aus Wasserstoff, Alkyl, Cycloalkyl, Alkenyl, Aryl, Alkaryl oder Aralkyl ausgewählt sein können. Als konkrete Beispiele für die Reste R¹ neben Wasserstoff sei auf die vorstehenden Beispiele für die entsprechenden Reste R ohne Aminogruppe und die entsprechenden Gruppen der nachstehenden konkreten Beispiele verwiesen. R¹ kann auch Substituenten aufweisen, z.B. Hydroxy, Alkoxy, Nitro, Carbonyl, Halogen oder Alkyl, oder durch Sauerstoffatome unterbrochen sein. Beispiele für solche Gruppen R¹ sind Acryloxy, Acetylglycyl, oder Hydroxyalkyl wie Hydroxyethyl. Das Aminosilan ist bevorzugt eine monomere Verbindung und enthält bevorzugt nicht mehr als 4 und bevorzugter nicht mehr als 3 Siliciumatome. Besonders bevorzugt enthält das Aminosilan nur ein Siliciumatom.

Konkrete Beispiele für einsetzbare Aminosilane sind Aminopropyltriethoxysilan, Aminopropyltrimethoxysilan, Aminomethyltriethoxysilan, Aminomethyltrimethoxysilan, Aminopropyltrichlorsilan, (N-Cyclohexylaminomethyl)triethoxysilan, 2-Aminoethyl-3-aminopropyltrimethoxysilan, N-(n-Butyl)-3-Aminopropyltrimethoxysilan, 2-Aminoethyl-3-aminopropylmethyldimethoxysilan, (3-Aminopropyl)diethoxymethylsilan, (3-Amino-propyl)ethyldiethoxysilan, (3-Methylaminopropyl)trimethoxysilane, (Aminoethylamino-methyl)phenethyltrimethoxysilan, (N,N-Diethyl-3-aminopropyl)trimethoxysilan, (N,N-Dimethylamino)dimethylchlorosilan, (N,N-Dimethylaminopropyl)trimethoxysilan, (N-Acetylglycyl)-3-aminopropyltrimethoxysilan, (N-Cyclohexylaminomethyl)methyldiethoxysilan, (N-Cyclohexylaminomethyl)triethoxysilan, (N-Phenylaminomethyl)methyl-dimethoxysilan, (N-Phenylaminomethyl)trimethoxysilan, 11-Aminoundecyltriethoxysilan, 3-(1,3-Dimethylbutyliden)aminopropyltriethoxysilan, 3-(1-Aminopropoxy)-3,3-dimethyl-1-propenyltrimethoxysilan, 3-(2,4-Dinitrophenylamino)propyltriethoxysilan, 3-(2-Aminoethylamino)propylmethyldimethoxysilan, 3-(2-Aminoethylamino)propyl-trimethoxysilan, 3-(Cyclohexylamino)propyltrimethoxysilan, 3-(Aminophenoxy)-propyltrimethoxysilan, 3-(N-Allylamino)propyltrimethoxysilan, 3-(N-Styrylmethyl-2-aminoethylamino)-propyltrimethoxysilan, 3-(Phenylamino)propyltrimethoxysilan, 3-Aminopropyldiisopropylethoxysilan, 3-Aminopro-pyldimethylethoxysilan, 3-Aminopropyl-methylbis(trimethylsiloxy)silan, 3-Aminopropylmethyldiethoxysilan, 3-Aminopropyltris-(methoxyethoxyethoxy)silan, 3-Aminopropyltris(trimethylsiloxy)silan, 4-Aminobutyltriethoxysilan, Aminophenyltrimethoxysilan, Bis(2-hydroxyethyl)-3-aminopropyltriethoxysilan, Diethylaminomethyltriethoxysilan, N,N-Dimethylaminomethyl-ethoxysilan, N-(2-Aminoethyl)-3-aminoisobutyldimethylmethoxysilan, N-(2-Aminoethyl)-3-aminopropylmethyldimethoxysilan, N-(2-Aminoethyl)-3-aminopropyltriethoxysilan, N-(2-Aminoethyl)-3-aminopropyltrimethoxysilan, N-(2-Aminomethyl)-1 1 -aminoundecyltrimethoxysilan, N-(3-Acryloxy-2-hydroxypropyl)-3-aminopropyltriethoxysilan, N-(3-Methacryloxy-2-hydroxypropyl)-3-aminopropyltri-ethoxysilan, N-(6-Aminohexyl)-aminopropyltrimethoxysilan, N-(Hydroxyethyl)-N-methylaminopropyltrimethoxysilan, N-3-[(Amino(polypropylenoxy)]aminopropyltrimethoxysilan, n-Butylaminopropyltrimethoxysilan, N-Cyclohexylaminopropyltrimethoxysilan, N-Ethylaminoisobutylmethyldiethoxysilan, N-Ethylaminoisobutyltrimethoxysilan, N-Methylaminopropylmethyldimethoxysilan, N-Methylaminopropyltrimethoxysilan, N-Phenylaminomethyltriethoxysilan, Phenylbis(dimethylamino)chlorosilan, tert.-Butylaminopropyltrimethoxysilan, Aminopropylsilanetriol, N-(2-Aminoethyl)-3-aminopropyl-silantriol, N-Cyclohexylaminomethyltriethoxysilan, N-Cyclohexylaminomethylmethyldiethoxysilan und N-Phenylaminomethyltrimethoxysilan.

Wichtig ist, dass das Aminosilan mindestens ein basisches N-Atom aufweist, dass durch eine Säure protoniert werden kann. Zur Ansäuerung des Aminosilans wird das Aminosilan oder das in einem Lösungsmittel gelöste Aminosilan mit einer Säure gemischt. Zweckmässigerweise wird hierfür eine wässrige Aminosilan-Lösung verwendet.

Die Aminosilane und die nachstehend diskutierten gegebenenfalls zusätzlich einsetzbaren anderen hydrolysierbaren Silane zur Oberflächenmodifikation lassen sich nach bekannten Methoden herstellen; vgl. W. Noll, "Chemie und Technologie der Silicone", Verlag Chemie GmbH, Weinheim/Bergstrasse (1968), und sind im Handel erhältlich.

Weitere nicht hydrolysierbare Reste R sind solche mit einer reaktiven Gruppe, wobei diese Reste auch insbesondere in den nachstehend diskutierten gegebenenfalls zusätzlich einsetzbaren anderen hydrolysierbaren Silanen zur Oberflächenmodifikation enthalten sein können, wobei die reaktive Gruppe z.B. eine Acryl- bzw. Acryloxy-, Methacryl- bzw. Methacryloxy-, eine bevorzugt geschützte Isocyanato-, eine Hydroxy-, Thio-, Glycidyl- bzw. Glycidyloxy- oder Säureanhydridgruppe ist. Diese reaktiven Gruppen können über Alkylen-, Alkenylen- oder Arylen-Brückengruppen, die durch Sauerstoff- oder -NH-Gruppen unterbrochen sein können, an das Siliciumatom gebunden sein. Die Brückengruppen enthalten vorzugsweise 1 bis 18 und insbesondere 1 bis 6 Kohlenstoffatome. Die genannten zweiwertigen Brückengruppen und gegebenenfalls vorliegende Substituenten leiten sich z.B. von den oben genannten einwertigen Alkyl-, Alkenyl-, Aryl-, Alkaryl- oder Aralkylresten ab. Der Rest R kann auch mehr als eine reaktive Gruppe tragen. Insbesondere kann auch das Aminosilan, z.B. an dem Rest mit einer Aminogruppe auch eine solche reaktive Gruppe tragen.

Beispiele für nicht hydrolysierbare Reste R mit reaktiven Gruppen sind (Meth)acryloxy-(C₁₋₆)-alkylen, z.B. (Meth)acryloxymethyl, (Meth)acryloxyethyl oder (Meth)acryloxypropyl, Isocyanato-(C₁₋₆)-alkylen, wie 3-Isocyanatopropyl, Thio-(C₁₋₆)-alkylen, wie Thiopropyl, Glycidyloxy-(C₁₋₆)-alkylen, wie Glycidyloxypropyl, (Meth)acryl steht für Methacryl oder Acryl. Beispiele für entsprechende Aminosilane oder die nachstehend diskutierten gegebenenfalls zusätzlich einsetzbaren anderen hydrolysierbaren Silane mit reaktiver Gruppe sind (Meth)acryloxypropylsilane und (Meth)acryloxymethylsilane, wie 3-(Meth)-acryloxypropyltriethoxysilan, 3-(Meth)acryloxypropyltrimethoxysilan, 3-(Meth)-acryloxymethyltriethoxysilan und 3-(Meth)acryloxymethyltrimethoxysilan, Bis(2-hydroxyethyl)-3-aminopropyltriethoxysilan, gegebenenfalls blockiertes 3-Isocyanatopropyltriethoxysilan und 3-Isocyanatopropyldimethylchlorsilan, Hydroxymethyltriethoxysilan, Mercaptopropyltriethoxysilan, Glycidyloxypropyltrimethoxysilan und Glycidyloxypropyltriethoxysilan.

Ferner können ein oder mehrere nicht hydrolysierbare Reste R im Aminosilan und insbesondere in den nachstehend diskutierten gegebenenfalls zusätzlich einsetzbaren anderen hydrolysierbaren Silanen zur Oberflächenmodifikation organische Reste aufweisen, welche mit Fluor substituiert sind, insbesondere lineare oder verzweigte (Per)fluoralkylgruppen. Vorzugsweise enthalten solche fluorierte Gruppen R 1 bis 30 Fluoratome, die bevorzugt an aliphatische Kohlenstoffatome gebunden sind. Bevorzugt sind die mit Fluor substituierten Kohlenstoffatome über eine nicht fluorierte Alkylenbrücke wie eine Ethylengruppe an das Si gebunden. Beispiele für einsetzbare fluorierte Reste R sind CF₃CH₂CH₂-, C₂F₅CH₂CH₂-, n-C₆F₁₃CH₂CH₂-, i-C₃F₇OCH₂CH₂CH₂-, n-C₈F₁₇CH₂CH₂-und n-C₁₀F₂₁-CH₂CH₂-. Beispiele für als zusätzliche Silane einsetzbare Fluorsilane sind CF₃CH₂CH₂Si(CH₃)(OCH₃)₂, C₂F₅-CH₂CH₂-Si(OCH₃)₃, n-C₆F₁₃-CH₂CH₂Si(OC₂H₅)₃, n-C₈F₁₇-CH₂CH₂-Si(OC₂H₅)₃, n-C₁₀F₂₁-CH₂CH₂-Si(OC₂H₅)₃, i-C₃F₇O-CH₂CH₂CH₂-SiCl₂(CH₃), n-C₆F₁₃-CH₂CH₂-Si(OCH₂CH₃)₂ und n-C₆F₁₃-CH₂CH₂-SiCl₂(CH₃).

Das Aminosilan kann wie bereits vorstehend diskutiert gegebenenfalls auch in Mischung mit einem oder mehreren anderen hydrolysierbaren Silanen zur Oberflächenmodifikation eingesetzt werden, z.B. wenn der Wunsch besteht, dem Silica eine weitere Eigenschaft zu verleihen. Das weitere Silan ist bevorzugt in der Aminosilan-Lösung enthalten. Allgemein sind hierfür alle hydrolysierbaren Silane geeignet, die mindestens eine nicht hydrolysierbare Gruppe aufweisen, wobei die nicht hydrolysierbare Gruppe(n) keine Aminogruppen aufweisen. Solche Silane sind dem Fachmann bekannt um im Handel erhältlich.

Beispielsweise kann es sich um Silane der vorstehenden Formel RₐSiX₍₄₋ₐ₎ handeln, wobei die Reste X gleich oder verschieden sind und hydrolysierbare Gruppen oder Hydroxygruppen bedeuten, die Reste R gleich oder verschieden sind und nicht hydrolysierbare Gruppen darstellen, wobei kein R eine Aminogruppe umfasst, und a den Wert 1, 2 oder 3, bevorzugt 1 oder 2, hat. Spezielle Beispiele für die Reste R und X sind, abgesehen von den Aminogruppen, die gleichen wie vorstehend für die Aminosilane angegeben, weswegen darauf verwiesen wird. Der oder die Reste R können neben üblichen Substituenten wie vorstehend angegeben auch die vorstehend angegebenen reaktiven funktionellen Gruppen enthalten, wie insbesondere (Meth)acrylGruppen, geschützte Isocyanatgruppen, Hydroxyguppen, Thiogruppen und Anhydridgruppen. Weitere geeignete Reste R sind lineare oder verzweigte (Per)fluor-alkylgruppen. Beispiele für zusätzliche Silane mit reaktiver Gruppe oder (Per)fluoralkylgruppe wurden bereits oben genannt.

Sofern neben dem Aminosilan ein weiteres Silan verwendet wird, kann das Verhältnis in weiten Bereichen variieren. Beispielsweise ist das molare Verhältnis von dem oder den anderen Silanen zu dem oder den Aminosilanen nicht mehr als 3 und bevorzugter nicht mehr als 1,5.

Als Säure kann jede dem Fachmann bekannte organische oder anorganische Säure verwendet werden. Vorzugsweise enthält die Säure mindestens eine Säuregruppe mit einem pKs-Wert < 6. Beispiele sind Salzsäure, Salpetersäure, Phosphorsäure, Ameisensäure, Essigsäure, Propionsäure, Trioxadecansäure, Zitronensäure und Sulfonsäuren. Die Säure kann als solche oder in einem Lösungsmittel zugegeben werden.

Bevorzugt wird die Säure in Form einer wässrigen Lösung zugegeben. Die Menge der zugegebenen Säure wird so gewählt, dass eine saure Aminosilan-Lösung erhalten wird, also mit einem pH-Wert von weniger als 7, bevorzugt im Bereich von 2 bis 6.

Wenn eine wässrige Silicadispersion als Ausgangskomponente eingesetzt wird, kann die Silicakonzentration in weiten Bereichen gewählt werden. In der Regel ist aber eine Silicakonzentration von 5 bis 50 Gew.-%, bevorzugt 10 bis 40 Gew.-%, bezogen auf das Gesamtgewicht der Dispersion zweckmässig.

Die Aminosilan-Konzentration in der herzustellenden Mischung kann ebenfalls in weiten Bereichen gewählt werden. Das zweckmässige Verhältnis hängt z.B. vom Molekulargewicht des Silans, der Zahl der pro Molekül enthaltenen Aminogruppen und der spezifischen Oberfläche des Silica ab. Der Fachmann kann das zweckmässige Verhältnis für den jeweiligen Fall ohne weiteres ermitteln. Je grösser die Oberfläche des Pulvers ist, umso mehr Aminosilan wird in der Regel benötigt. Bei Verwendung von Pulvern mit sehr grosser Oberfläche (z.B. 700 m²/g) und/oder Silanen mit höherer Molmasse kann z.B. eine Konzentration von bis zu 60 Gew.-% oder mehr Aminosilan bezogen auf Silica zweckmässig sein.

Im allgemeinen können die saure Aminosilan-Lösung und das Silicapulver bzw. die Silicadispersion z.B. in einem solchen Verhältnis gemischt werden, dass in der Mischung 0,1 bis 60, bevorzugt 0,5 bis 20 und bevorzugter 1 bis 10 Gew.-% Aminosilan bezogen auf Silica enthalten sind. Alternativ kann das zweckmässige Verhältnis über die molare Konzentration Aminosilan bezogen auf die Oberfläche von Silica angeben werden, z.B. kann das Aminosilan in einer Menge von 0,1 bis 20 µmol/m² und bevorzugt 0,5 bis 10 µmol/m² Pulveroberfläche Silica zugegeben werden (bezogen auf BET-Oberfläche des eingesetzten Silica (gemessen mit Stickstoff)).

Der Mischung von Aminosilan und Säure erfolgt durch einfaches Zusammengeben, wobei zweckmässigerweise gerührt wird. Bei der erhaltenen Lösung handelt es sich bevorzugt um eine wässrige Aminosilan-Lösung. Die erhaltene Aminosilan-Lösung kann unmittelbar nach Zugabe der Säure für die Stabilisierung von Silica im zweiten Schritt verwendet werden, manchmal kann es auch zweckmässig sein, die Mischung nach der Zugabe der Säure einige Zeit zur Aktivierung stehen zu lassen (z.B. einige Minuten). Nach Zugabe der Säure ist es aber bevorzugt, die erhaltene saure Aminosilan-Lösung innerhalb von 1 h für den zweiten Schritt der Stabilisierung von Silica zu verwenden. Bevorzugter wird die saure Aminosilan-Lösung spätestens 15 min oder spätestens 30 min nach erfolgter Zugabe der Säure eingesetzt.

Im zweiten Schritt erfolgt die Mischung der hergestellten sauren Aminosilan-Lösung mit Silica, um die kationisch stabilisierte wässrige Silicadispersion zu erhalten. Die Mischung der beiden Komponenten kann auf zwei verschiedene Weisen erfolgen. Zum einen kann die saure Aminosilan-Lösung zu einer wässrigen Dispersion von Silica gegeben werden oder umgekehrt, wobei während und/oder nach der Zugabe zweckmässigerweise gerührt wird oder gegebenenfalls eine Scherung angewendet wird. Eine solche Scherung kann abhängig von z.B. der Viskosität oder dem Feststoffgehalt zweckmässig sein, ist aber im allgemeinen nicht erforderlich. Alternativ kann Silica in Form von Pulver zu der sauren Aminosilan-Lösung gegeben werden oder umgekehrt, wobei die Mischung zweckmässigerweise während und/oder nach der Zugabe einer Scherung unterworfen wird, um die Dispergierung zu unterstützen.

Für die Scherung wird zweckmässigerweise eine Dispergiermaschine verwendet. Beispiele für Dispergiermaschinen sind Leitstrahlmischer, Dissolver, Düsenstrahldispergatoren, Homogenisatoren, Turborührer, Mühlen, wie Mühlen mit losen Mahlwerkzeugen, z.B. Rührwerkskugelmühlen, Mörsermühlen, Kolloidmühlen, Kneter, wie Scherwalzenkneter, und Walzenstühle.

Bei der Umsetzung von Silicapulver bzw. Silicadispersion mit der sauren Aminosilan-Lösung wird das Silica kationisch stabilisiert. Hierbei kommt es zu einer Modifikation der Oberflächen der Silicateilchen durch das Aminosilan wie nachstehend näher erläutert. Die Reaktion findet ohne weiteres statt und erfolgt in der flüssigen Phase der Reaktionsmischung. Die Temperatur kann in weiten Bereichen variieren, es kann bei Raumtemperatur gearbeitet werden, aber auch höhere oder niedrigere Temperaturen durch Erwärmen oder Kühlen können zweckmässig sein. Eine Erwärmung der Mischung kann sich durch den Einsatz einer Dispergiermaschine ergeben, was erwünscht sein kann oder eine Kühlung erforderlich machen kann. Die Umsetzung von Silica und Aminosilan wird z.B. bevorzugt bei einer Temperatur von 10 °C bis zum Siedepunkt des Lösungsmittels (z.B. 100°C), bevorzugt von Raumtemperatur (20°C) bis 50°C, durchgeführt. Die Reaktion kann auch bei vermindertem oder erhöhtem Druck durchgeführt werden, dies ist aber nicht notwendig.

Es wird eine kationisch stabilisierte wässrige Silicadispersion erhalten, die so wie sie ist verwendet werden kann. Gegebenenfalls können die flüssigen Bestandteile teilweise oder vollständig entfernt werden. Bei den flüssigen Bestandteilen handelt es sich im wesentlichen um das oder die Lösungsmittel. Gegebenenfalls kann auch die Säure oder nicht umgesetztes Aminosilan oder andere Komponenten zu den flüssigen Bestandteilen zählen. Im folgenden werden die flüssigen Bestandteile einfach als Lösungsmittel bezeichnet. Eine teilweise Entfernung des Lösungsmittels kann z.B. durchgeführt werden, um eine gewünschte Konzentration einzustellen. Bei einer vollständigen Entfernung des Lösungsmittels wird ein kationisch stabilisiertes Pulver erhalten. Dadurch kann eine erhöhte Lagerfähigkeit erreicht werden. Die Pulverform kann auch für den Transport oder für einen Lösungsmitteltausch vorteilhaft sein. Eine erneute Dispergierung des kationisch stabilisierten Silicapulvers in einem Lösungsmittel wie Wasser ist jederzeit möglich. Natürlich kann auch das Pulver als solches in den jeweiligen Anwendungen eingesetzt werden.

Die nach dem erfindungsgemässen Verfahren erhaltene kationisch stabilisierte wässrige Silicadispersion weist vorzugsweise einen Feststoffgehalt von 5 bis 50 Gew.-%, bevorzugt 5 bis 40 Gew.-% und besonders bevorzugt 10 bis 30 Gew.-% auf. Der pH-Wert der Dispersion liegt bevorzugt im Bereich von 2 bis 6. Die mittlere Partikelgrösse der Silicateilchen liegt im allgemeinen bei weniger als 800 nm, bevorzugt unter 400 nm und bevorzugter unter 200 nm. Unter der mittleren Partikelgrösse wird in der vorliegenden Beschreibung der d₅₀-Wert der Volumenverteilung verstanden. Dem Fachmann sind Verfahren zu Bestimmung dieser Partikelgrössen sowie die Einzelheiten zu diesen Verfahren bekannt. Beispiele für geeignete Messverfahren sind dynamische Laserlichtstreuung (z.B. mit einem Ultrafein-Partikelanalysator (UPA)), Röntgenscheibenzentrifuge oder quantitative Bildanalyse an elektronenmikroskopischen Aufnahmen.

Die nach dem erfindungsgemässen Verfahren erhaltenen kationisch stabilisierten wässrigen Silicadispersionen weist ferner vorzugsweise eine elektrische Leitfähigkeit von unter 10 mS/cm, bevorzugt von unter 8 mS/cm und insbesondere unter 5 mS/cm auf. Überraschenderweise wird nach dem erfindungsgemässen Verfahren eine Dispersion erhalten, die relativ zum Feststoffgehalt an Silica eine äusserst geringe Viskosität besitzt. Die Viskosität, gemessen nach Brookfield bei 20°C, der kationisch stabilisierten wässrigen Silicadispersion ist z.B. < 1,5 Pas, bevorzugt < 1,0 Pas und besonders bevorzugt < 0,5 Pas. Die Viskosität kann z.B. im Bereich von 2 bis 500 mPas liegen.

Ferner hat sich gezeigt, dass die nach dem erfindungsgemässen Verfahren erhaltene kationisch stabilisierte wässrige Silicadispersion eine überraschend hohe Lagerstabilität aufweist. Die Dispersionen sind bei 20 °C länger als 1 Tag stabil und können länger als 3 Tagen und sogar deutlich länger stabil bleiben.

Der Dispersion können organische Bindemittel oder andere Additive zugesetzt werden. Diese zusätzlichen Mittel richten sich natürlich nach der jeweiligen Anwendung. Sie können prinzipiell zu jedem beliebigen Zeitpunkt zugegeben werden. In der Regel werden sie aber gewöhnlich erst nach Bildung der kationisch stabilisierten Dispersion zugegeben.

Zu den nach dem erfindungsgemässen Verfahren erhaltenen kationisch stabilisierten wässrigen Silicadispersionen können überraschenderweise ohne grösseren Viskositätsanstieg organische Polymere bzw. Bindemittel zugegeben werden.

Geeignet sind insbesondere wasserlösliche oder wasserdispergierbare Polymere bzw. Bindemittel, sofern sie bei pH < 7 ungeladen oder kationisch stabilisiert vorliegen. Beispiele für geeignete organische Polymere sind Polyvinylacetat, Polyvinylbutyrat, Polyvinylalkohol, Poylvinylacetal, Celluloseharze wie Methylcellulose, Ethylcellulose, Hydroxyethylcellulose, Carboxymethylcellulose, Chitin, Chitosan, Stärke, Polyethylenoxid, Polypropylenoxid, Polyethylenglykol, Polyvinylether, Polyacrylamid, Polyvinylpyrrolidon, Polyacrylsäure, Gelatine, Alginate, Harze auf der Basis von Maleinsäure, Polyepoxide, Polyaminoamide; und auch substituierte bzw. funktionalisierte Derivate, z.B. kationisch funktionalisierte Derivate, davon, die im allgemeinen wasserlösliche Polymere darstellen. Ferner eignen sich kationisch stabilisierte Polymerdispersionen, wie Polyurethan, Polyacrylat, Vinylacetat-Copolymere, Siliconharze, wobei sich die Art der Stabilisierung nach den funktionellen Gruppen richtet.

Beispiele für bevorzugte organische Polymere bzw. Bindemittel sind Polyvinylalkohol, z.B. Mowiol^{®}-Polymere wie Mowiol^{®} 40-88 von Clariant, Polyvinylacetat und Polyvinylacetal, wie Polyvinylbutyral.

Es können je nach Anwendungszweck weitere Additive zur kationisch stabilisierten Silicadispersion gegeben werden, wie z.B. Verlaufsmittel, Entschäumer, organische Lösungsmittel, Koaleszenzmittel, Biozide, Tenside, Glykole, Härter und Vernetzer, deren Typ vom Bindemittel abhängt, z.B. Borverbindungen oder gegebenenfalls geschützte Isocyanate für PVA oder Aldehyde für Gelatine, Weichmacher, wie z.B. Phthalate, Beizen, z.B. kationisch funktionalisierte Polymere, Antioxidationsmittel, Co-Solventien und Netz- und Dispergiermittel.

Durch die Erfindung werden wässrige, kationisch stabilisierte Silicadispersionen durch Modifikation von Silica mit einer saure Aminosilan-Lösung bereitgestellt. Dabei handelt es sich um eine Modifikation der Oberfläche der Silicateilchen mit dem Aminosilan. Ohne sich an eine Theorie binden zu wollen, wird die Oberflächenmodizierung im folgenden erläutert.

Es ist bekannt, dass hydrolysierbare Gruppen von Silanen in Gegenwart von Wasser unter Bildung von Silanolgruppen hydrolysiert werden können. Es ist auch bekannt, dass Säuren diese Hydrolyse katalysieren können. Die hydrolysierbaren Gruppen der Aminosilane, falls vorhanden, können daher in der sauren Aminosilan-Lösung und/ oder in der durch Zugabe von Silica erhaltenen sauren wässrigen Mischung hydrolysiert werden. Inwieweit bzw. in welchem Ausmass die Hydrolyse in der sauren Aminosilan-Lösung statfindet, hängt von mehreren Faktoren ab, wie z.B. pH-Wert, Art des Silans, Zeit zwischen Zugabe der Säure zum Aminosilan und Mischen der Aminosilan-Lösung mit Silica, und kann vom Fachmann in gewünschter Weise gesteuert werden.

Unter den hydrolysierten Aminosilanen kann es teilweise auch zu Kondensationsreaktionen kommen, so dass in der Aminosilan-Lösung nach einer gewissen Zeit auch Kondensate enthalten sein können. Gegebenenfalls kann es sich bei der Lösung auch um ein Sol handeln. Zweckmässigerweise sollte ein zu grosses Ausmass der Kondensatbildung aber vermieden werden, so dass der Zeitraum zwischen Herstellung der sauren Aminosilan-Lösung und Mischen mit Silica nicht zu gross sein sollte. Wie vorstehend angegeben, sollte dieser Zeitraum nicht mehr als 1 h und bevorzugt höchstens 30 min betragen.

Dem Fachmann ist bekannt, dass sich auf der Oberfläche von Partikeln gewöhnlich relativ reaktionsfähige Gruppen befinden. Auf Silicateilchen befinden sich z.B als Oberflächengruppen Restvalenzen wie Hydroxygruppen (-SiOH) oder gegebenenfalls Oxygruppen. Nach der Vermischung können die reaktiven Oberflächengruppen von Silica mit hydrolysierten Gruppen der Aminosilane, d.h. den Silanolgruppen, reagieren, wodurch die Aminosilane direkt an der Silicaoberfläche der Silicateilchen gebunden werden, so dass eine kationische Stabilisierung durch die Oberflächenmodifizierung erfolgt. Es handelt sich dabei um eine chemische Bindung, insbesondere eine kovalente Bindung, zwischen Gruppen an der Silicaoberfläche und dem Aminosilan. Da sich die Teilchen in einem sauren Medium befinden, ist zumindest ein Teil der Aminogruppen der an die Silicateilchen gebundenen Aminosilane protoniert. Durch die Protonierung des Aminosilans an der oder den Aminogruppen werden positive Ladungen gebildet, die zu einer kationischen Stabilisierung führen. Bei Entfernung des Lösungsmittels zur Herstellung des Pulvers kann es zu einer Salzbildung mit einem vorhandenen Gegenion, z.B. aus der Säure, kommen, wenn das Aminosilan, das an den Silicateilchen gebunden ist, in protonierter Form vorliegt.

Bei der Reaktion zwischen den Oberflächengruppen der Silicateilchen und den Silanolgruppen der hydrolysierten Aminosilane kommt es zu einer bekannten Kondensationsreaktion unter Bildung von -Si-O-Si-Brücken zwischen Silicaoberfläche und dem Aminosilan. Solche Oberflächenmodifizierungsreaktionen zwischen Oxidteilchen und Silanen sind im Prinzip bekannt. Es war aber nicht bekannt, dass dies auch für die Kombination Silicateilchen und Aminosilan möglich war. Durch diese Erfindung wird hierfür ein Verfahren bereitgestellt, das diese Oberflächenmodifizierung ermöglicht. Im Gegensatz zum Stand der Technik brauchen erfindungsgemäss auf der Silicaoberfläche der Teilchen keine Metallverbindungen oder -gruppen abgeschieden oder gebunden zu sein, um eine Umpolung der Oberflächenladung zu erreichen. Es erfolgt eine direkte Anbindung der Aminosilane an Silica.

Das erfindungsgemässe kationisch stabilisierte Silica, insbesondere in Form der erfindungsgemässen kationisch stabilisierten wässrigen Silicadispersionen, kann bei einer Vielfalt von Anwendungen eingesetzt werden. Eine bevorzugte Verwendung ist in Streichfarben für Druckmedien, z.B. Papier, einschliesslich Karton und Spezialpapieren, Folien und anderen Druckmedien. Dadurch kann z.B. eine Verbesserung der Tintenaufnahme erreicht werden. Die Dispersion eignet sich insbesondere für Druckmedien für Tintenstrahlverfahren, wie Tintenstrahlpapier.

Weitere Beispiele für Verwendungen der Silicadispersionen sind in Beschichtungszusammensetzungen zur Oberflächenbehandlung von Substraten, wie Holz, Kunststoff, Metall, Textilien oder Folien. Die Verbesserungen können die Haftung, die optischen sowie die mechanischen Eigenschaften betreffen. Insbesondere können damit eine erhöhte Kratzfestigkeit und eine Mattierung erreicht werden, so dass die Dispersionen z.B. für Hartbeschichtungen von Kunststoffen oder zur Mattierung geeignet sind. Das erfindungsgemässe kationisch stabilisierte Silica kann auch in Beschichtungen auf Folien zur besseren Trennbarkeit oder in Schleif- und Poliermitteln zur Bearbeitung von Oberflächen, wie z.B. Keramiken, Gläsern, Glaskeramiken und Halbleiterwafern, z.B. in der Produktion von elektronischen Bauteilen, verwendet werden.

Weitere Anwendungsmöglichkeiten solcher Dispersionen sind z.B. als Additiv in Kataphoreselacken (kationischen Elektrotauchlacken), in getrockneter Pulverform als Additiv in Pulverlacken, als Additiv in kationischen Textilbehandlungsmitteln (z.B. Weichspüler), als Hydrophilierungsmittel in Lacken, Kunststoffen, Glas und Keramik, als Filtrationsmittel, als Fällungreagenz und als Additiv in Industrie- und Haushalts-Reinigungsmitteln

Es folgen Beispiele zur Erläuterung der Erfindung, die den Umfang der Erfindung in keiner Weise beschränken sollen.

### Beispiel 1

In 387 g destilliertes Wasser mit 5 g Essigsäure und 10 g APTES (Aminopropyltriethoxysilan) wurden 100 g Silica (Aerosil^{®} 200, Degussa) mittels eines Rotor-Stator-Systems (Dispermix, Laborserie X10, Ystral) eindispergiert, wobei der pH-Wert der Dispersion durch kontinuierliche Zugabe von Essigsäure auf pH 4 gehalten wurde. Man erhält eine stabile kationische Silica-Dispersion.

### Eigenschaften der Dispersion:

Feststoffgehalt: 19 Gew.-%; Leitwert: 2,8 mS/cm; pH-Wert: 4; Partikelgrösse: 173 nm (D50, Volumenverteilung); Viskosität: 95 mPas bei 100 U/Min., RT (20°C).

Die Dispersion ist ausgesprochen stabil, selbst nach 5 Tage wird kein Viskositätsanstieg festgestellt. Wie Beispiel 5 zeigt, ist die Dispersion ohne weiteres mit PVA mischbar.

### Beispiel 2

In 77,4 g destilliertes Wasser wurden 15 g Silica (Aerosil^{®} 200, Degussa) mittels eines Rotor-Stator-Systems (Dispermix, Laborserie X10, Ystral) eindispergiert. Zu dieser Dispersion wird unter weiterer Scherung eine Mischung von 1,5 g APTES und 2,5 g Essigsäure zugeben. Man erhält eine stabile kationische Silica-Dispersion.

### Eigenschaften der Dispersion:

Feststoffgehalt: 15 Gew.-%; Leitwert: 3 mS/cm; pH-Wert: 3,8; Partikelgrösse: 165 nm (D50, Volumenverteilung); Viskosität: 48 mPas bei 100 U/Min., RT.

### Beispiel 3

In 82 g destilliertes Wasser mit 1,5 g Essigsäure und 1,5 g APTES wurden 15 g Silica (Aerosil^{®} 300, Degussa) mittels eines Rotor-Stator-Systems (Dispermix, Laborserie X10, Ystral) eindispergiert. Man erhält eine stabile kationische Silica-Dispersion.

### Eigenschaften der Dispersion:

Feststoffgehalt: 15 Gew.-%; Leitwert: 3 mS/cm; pH-Wert: 4; Partikelgrösse: 180 nm (D50, Volumenverteilung), Viskosität: 48 mPas bei 100 U/Min., RT.

### Beispiel 4

Zu einer Dispersion von 12,9 g Silica (Aerosil^{®} 200, Degussa) in 100,6 g Wasser und 1,1 g Essigsäure (30% in Wasser) wurde unter Rühren eine Lösung aus 1,3 g APTES in 17,3 g Wasser und 0,38 g Essigsäure (30% in Wasser) gegeben. Man erhält eine stabile Dispersion.

### Eigenschaften der Dispersion:

Feststoffgehalt: 10 Gew.-%; Leitwert: 1,8 mS/cm; pH-Wert: 5; Partikelgrösse: 470 nm (D50, Volumenverteilung); Viskosität: 50 mPas bei 100 U/Min., RT.

### Beispiel 5

Zu 100 g einer Silica-Dispersion aus Beispiel 1 wurden 33 g einer 11 % PVA-Lösung (Polyvinylalkohol, 80% hydrolysiert, Mw 9000 - 10000, Sigma Aldrich) bei 45 °C unter Rühren zugesetzt. Man erhält eine stabile PVA enthaltende Silica-Dispersion mit einer Viskosität von 54 mPas bei 100 U/Min., RT.

### Beispiel 6

Zu 20 g einer Silica-Dispersion aus Beispiel 2 wurden 0,55 g PVA (Polyvinylalkohol, 80% hydrolysiert, M_{w} 9000 - 10000, Sigma Aldrich) bei 45 °C unter Rühren zugesetzt. Man erhält eine stabile PVA enthaltende Silica-Dispersion mit einer Viskosität von 78 mPas bei 100 U/Min., RT.

### Beispiel 7

Eine Mischung aus 100,2 g destilliertem Wasser, 2,0 g APTES und 0,5 g Schwefelsäure (H₂SO₄ 96%) wurde hergestellt. Der pH Wert beträgt 2 (Teststäbchen, Merck). In die Mischung wurden unter Scherung (Dispermix, Laborserie X10, Ystral) 20,0 g Aerosil^{®} 200 (Degussa) eindispergiert. Man erhält eine stabile wässrige Silica-Dispersion.

### Eigenschaften der Dispersion:

Feststoffgehalt: 16 Gew.-%; Partikelgrösse: 226 nm (D50, Volumenverteilung), Viskosität: 64 mPas bei 100 U/Min.; 20 °C.

### Beispiel 8

Zu einer Mischung aus 99,5 g destilliertem Wasser, 0,98 g APTES und 0,24 g Schwefelsäure (H₂SO₄ 96%) wurden 0,58 g MTMS (Methyltrimethoxysilan) gegeben. Der pH-Wert der Mischung betrug 3 (Teststäbchen, Merck). In die Mischung wurden unter Scherung (Dispermix, Laborserie X10, Ystral) 20,1 g Aerosil^{®} 200 (Degussa) eindispergiert. Man erhält eine stabile wässrige Silica-Dispersion. Das Molverhältnis von APTES zu MTMS beträgt 1:1.

### Eigenschaften der Dispersion:

Feststoffgehalt: 16 Gew.-%, Partikelgrösse: 190 nm (D50, Volumenverteilung), Viskosität: 26 mPas bei 100 U/Min.; 20 °C.

## Patentansprüche

1. Verfahren zur Herstellung von kationisch stabilisiertem Silica in Form einer wässerigen Dispersion, bei dem a) ein oder mehrere Aminosilane mit einer Säure gemischt werden, um eine saure Aminosilan-Lösung zu erhalten, und b) Silica in Form einer wässerigen Dispersion oder eines Pulvers durch Mischen mit der sauren Aminosilan-Lösung umgesetzt wird, um eine kationisch stabilisierte wässerige Silicadispersion zu erhalten.

2. Verfahren nach Anspruch 1, **dadurch gekennzeichnet, dass** Silica zur sauren Aminosilan-Lösung gegeben wird, wobei die Lösung während und/oder nach der Zugabe einer Scherung unterworfen wird.

3. Verfahren nach Anspruch 1 oder Anspruch 2, **dadurch gekennzeichnet, dass** die saure Aminosilan-Lösung eine wässerige Aminosilan-Lösung ist.

4. Verfahren nach einem der Ansprüche 1 bis 3, **dadurch gekennzeichnet, dass** das Silica für die wässerige Dispersion ausgewählt wird aus pyrogenem SiO₂, gefälltem SiO₂, kolloidalem SiO₂, Kern-Schale-Teilchen mit einer Schale aus SiO₂ und einem Kern aus Metalloxid.

5. Verfahren nach einem der Ansprüche 1 und 3 bis 4, **dadurch gekennzeichnet, dass** der Anteil von Silica in der wässerigen Silicadispersion 5 bis 50 Gew.-% bezogen auf das Gesamtgewicht der Dispersion beträgt.

6. Verfahren nach einem der Ansprüche 1 bis 5, **dadurch gekennzeichnet, dass** die saure Aminosilan-Lösung und das Silica in solchen Anteilen gemischt werden, dass in der Mischung 0,1 bis 60 Gew.-% Aminosilan bezogen auf Silica enthalten sind.

7. Verfahren nach einem der Ansprüche 1 bis 6, **dadurch gekennzeichnet, dass** die saure Aminosilan-Lösung einen pH-Wert im Bereich von 2 bis 6 aufweist.

8. Verfahren nach einem der Ansprüche 1 bis 7, **dadurch gekennzeichnet, dass** die Säure mindestens eine Säuregruppe mit einem pKs-Wert von kleiner als 6 aufweist.

9. Verfahren nach einem der Ansprüche 1 bis 8, **dadurch gekennzeichnet, dass** der kationisch stabilisierten wässerigen Silicadispersion ein organisches Bindemittel und/oder ein anderes Additiv zugegeben wird.

10. Verfahren nach einem der Ansprüche 1 bis 9, **dadurch gekennzeichnet, dass** die flüssigen Bestandteile ganz oder teilweise entfernt werden, um das kationisch stabilisierte Silica in Form eines Pulvers zu erhalten.

11. Kationisch stabilisiertes Silica in Form einer wässerigen Dispersion, die Silicateilchen umfasst, die an der Oberfläche mit Aminosilan modifiziert sind, erhalten gemäss dem Verfahren nach einem oder mehreren der Ansprüche 1 bis 10.

12. Kationisch stabilisiertes Silica in Form eines Pulvers, das Silicateilchen umfasst, die an der Oberfläche mit Aminosilan modifiziert sind, erhalten gemäss dem Verfahren nach einem oder mehreren der Ansprüche 1 bis 10.

13. Kationisch stabilisiertes Silica nach Anspruch 11 oder 12, **dadurch gekennzeichnet, dass** das oberflächenmodifizierende Aminosilan in protonierter Form vorliegt.

14. Kationisch stabilisiertes Silica nach Anspruch 11 oder 13 in Form einer wässerigen Dispersion, **dadurch gekennzeichnet, dass** der Anteil an Silica 5 bis 50 Gew.-% bezogen auf das Gesamtgewicht der Dispersion ausmacht.

15. Kationisch stabilisiertes Silica nach einem der Ansprüche 11, 13 oder 14 in Form in einer wässerigen Dispersion, **dadurch gekennzeichnet, dass** der pH-Wert 2 bis 6 ist.

16. Kationisch stabilisiertes Silica nach einem der Ansprüche 11, oder 13 bis 15 in Form in einer wässerigen Dispersion, **dadurch gekennzeichnet, dass** die elektrische Leitfähigkeit kleiner als 10 mS/cm ist.

17. Kationisch stabilisiertes Silica nach einem der Ansprüche 11 oder 13 bis 16 in Form in einer wässrigen Dispersion, **dadurch gekennzeichnet, dass** die Viskosität kleiner als 1,5 Pas ist.

18. Kationisch stabilisiertes Silica nach einem der Ansprüche 11 bis 17, **dadurch gekennzeichnet, dass** die mittlere Teilchengrösse der Silicateilchen nicht mehr als 800 nm beträgt.

19. Kationisch stabilisiertes Silica nach einem der Ansprüche 11 bis 18, **dadurch gekennzeichnet, dass** die Silicateilchen an der Oberfläche zusätzlich mit mindestens einem weiteren Silan ohne Aminogruppe modifiziert sind.

20. Kationisch stabilisiertes Silica nach einem der Ansprüche 11 oder 13 bis 19 in Form in einer wässerigen Dispersion, **dadurch gekennzeichnet, dass** die Dispersion zusätzlich ein organisches Bindemittel und/oder ein anderes Additiv enthält.

21. Verwendung von kationisch stabilisiertem Silica nach einem der Ansprüche 11 bis 20 in Streichfarben für Druckmedien, insbesondere für Tintenstrahlverfahren.

22. Verwendung von kationisch stabilisiertem Silica nach einem der Ansprüche 11 bis 20 in Beschichtungszusammensetzungen zur Oberflächenbehandlung von Substraten.

23. Verwendung von kationisch stabilisiertem Silica nach einem der Ansprüche 11 bis 20 in Trennmitteln oder Schleif- und Poliermitteln.

24. Verwendung von kationisch stabilisiertem Silica nach einem der Ansprüche 11 bis 20 in einem Kataphoreselack, Pulverlack, kationischen Textilbehandlungsmittel oder Reinigungsmittel oder als Hydrophilierungsmittel, Filtrationsmittel oder Fällungreagenz.

## Claims

1. A method of producing cationically stabilised silica in the form of an aqueous dispersion, wherein a) one or more aminosilanes are mixed with an acid to obtain an acidic aminosilane solution, and b) silica in the form of an aqueous dispersion or a powder is reacted with the acidic aminosilane solution by mixing to obtain a cationically stabilised aqueous silica dispersion.

2. A method according to Claim 1, **characterised in that** silica is added to the acidic aminosilane solution and the solution is subjected to shearing during and/or after the addition.

3. A method according to Claim 1 or Claim 2, **characterised in that** the acidic aminosilane solution is an aqueous aminosilane solution.

4. A method according to any one of Claims 1 to 3, **characterised in that** the silica for the aqueous dispersion is selected from pyrogenous SiO₂, precipitated SiO₂, colloidal SiO₂, core-shell particles with a shell of SiO₂ and a core of metal oxide.

5. A method according to any one of Claims 1 and 3 to 4, **characterised in that** the proportion of silica in the aqueous silica dispersion is in the range from 5% to 50% by weight based on the total weight of the dispersion.

6. A method according to any one of Claims 1 to 5, **characterised in that** the acidic aminosilane solution and the silica are mixed in such proportions that from 0.1% to 60% by weight of aminosilane based on silica is contained in the mixture.

7. A method according to any one of Claims 1 to 6, **characterised in that** the acidic aminosilane solution has a pH in the range from 2 to 6.

8. A method according to any one of Claims 1 to 7, **characterised in that** the acid has at least one acid group with a pKa value of less than 6.

9. A method according to any one of Claims 1 to 8, **characterised in that** an organic binder and/or some other additive is added to the cationically stabilised aqueous silica dispersion.

10. A method according to any one of Claims 1 to 9, **characterised in that** liquid constituents are wholly or partly removed to obtain the cationically stabilised silica in the form of a powder.

11. A cationically stabilised silica in the form of an aqueous dispersion comprising silica particles surface modified with aminosilane, obtained by the method according to one or more of Claims 1 to 10.

12. A cationically stabilised silica in the form of a powder comprising silica particles surface modified with aminosilane, obtained by the method according to one or more of Claims 1 to 10.

13. A cationically stabilised silica according to Claim 11 or 12, **characterised in that** the surface-modifying aminosilane is present in protonated form.

14. A cationically stabilised silica according to Claim 11 or 13 in the form of an aqueous dispersion, **characterised in that** the proportion of silica is in the range from 5% to 50% by weight based on the total weight of the dispersion.

15. A cationically stabilised silica according to any one of Claims 11, 13 or 14 in the form of an aqueous dispersion, **characterised in that** the pH is in the range from 2 to 6.

16. A cationically stabilised silica according to any one of Claims 11 or 13 to 15 in the form of an aqueous dispersion, **characterised in that** the electrical conductivity is less than 10 mS/cm.

17. A cationically stabilised silica according to any one of Claims 11 or 13 to 16 in the form of an aqueous dispersion, **characterised in that** the viscosity is less than 1.5 Pas.

18. A cationically stabilised silica according to any one of Claims 11 to 17, **characterised in that** the median particle size of the silica particles is not more than 800 nm.

19. A cationically stabilised silica according to any one of Claims 11 to 18, **characterised in that** the silica particles are additionally surface modified with at least one further silane without amino group.

20. A cationically stabilised silica according to any one of Claims 11 or 13 to 19 in the form of an aqueous dispersion, **characterised in that** the dispersion further contains an organic binder and/or some other additive.

21. The use of cationically stabilised silica according to any one of Claims 11 to 20 in coating slips for printing media, particularly for ink-jet processes.

22. The use of cationically stabilised silica according to any one of Claims 11 to 20 in coating compositions for surface treatment of substrates.

23. The use of cationically stabilised silica according to any one of Claims 11 to 20 in release agents or abrasive and polishing agents.

24. The use of cationically stabilised silica according to any one of Claims 11 to 20 in a cataphoretic coating, powder coating, cationic textile treatment agent or cleaning agent or as a hydrophilising agent, filtration agent or precipitation reagent.

## Revendications

1. Procédé pour la préparation de silice stabilisée cationiquement sous forme d'une dispersion aqueuse, dans lequel a) un ou plusieurs aminosilanes sont mélangés avec un acide, pour obtenir une solution acide d'aminosilane, et b) de la silice sous forme d'une dispersion aqueuse ou d'une poudre est transformée par mélange avec la solution acide d'aminosilane pour obtenir une dispersion aqueuse de silice stabilisée cationiquement.

2. Procédé selon la revendication 1, **caractérisé en ce que** de la silice est ajoutée à la solution acide d'aminosilane, la solution étant soumise à un cisaillement pendant et/ou après l'addition.

3. Procédé selon la revendication 1 ou la revendication 2, **caractérisé en ce que** la solution acide d'aminosilane est une solution aqueuse d'aminosilane.

4. Procédé selon l'une quelconque des revendications 1 à 3, **caractérisé en ce que** la silice pour la dispersion aqueuse est choisie parmi le SiO₂ pyrogène, le SiO₂ précipité, le SiO₂ colloïdal, des particules à noyau-coquille avec une coquille en SiO₂ et un noyau en oxyde métallique.

5. Procédé selon l'une quelconque des revendications 1 et 3 à 4, **caractérisé en ce que** la proportion de silice dans la dispersion aqueuse de silice représente 5 à 50% en poids par rapport au poids total de la dispersion.

6. Procédé selon l'une quelconque des revendications 1 à 5, **caractérisé en ce que** la solution acide d'aminosilane et la silice sont mélangées en des proportions telles que le mélange contient 0,1 à 60% en poids d'aminosilane par rapport à la silice.

7. Procédé selon l'une quelconque des revendications 1 à 6, **caractérisé en ce que** la solution acide d'aminosilane présente un pH dans la domaine de 2 à 6.

8. Procédé selon l'une quelconque des revendications 1 à 7, **caractérisé en ce que** l'acide présente au moins un groupe acide présentant une valeur pKs inférieure à 6.

9. Procédé selon l'une quelconque des revendications 1 à 8, **caractérisé en ce que** la dispersion aqueuse de silice, stabilisée cationiquement, est additionnée d'un liant organique et/ou d'un autre additif.

10. Procédé selon l'une quelconque des revendications 1 à 9, **caractérisé en ce que** les constituants liquides sont éliminés totalement ou partiellement pour obtenir la silice cationiquement stabilisée sous forme d'une poudre.

11. Silice stabilisée cationiquement sous forme d'une dispersion aqueuse qui comprend des particules de silice qui sont modifiées en surface avec de l'aminosilane, obtenue selon le procédé selon l'une ou plusieurs des revendications 1 à 10.

12. Silice stabilisée cationiquement sous forme d'une poudre, qui comprend des particules de silice qui sont modifiées en surface avec de l'aminosilane, obtenue selon le procédé selon l'une ou plusieurs des revendications 1 à 10.

13. Silice stabilisée cationiquement selon la revendication 11 ou 12, **caractérisée en ce que** l'aminosilane modificateur de surface se trouve sous forme protonée.

14. Silice stabilisée cationiquement selon la revendication 11 ou 13, sous forme d'une dispersion aqueuse, **caractérisée en ce que** la proportion de silice représente 5 à 50% en poids par rapport au poids total de la dispersion.

15. Silice stabilisée cationiquement selon l'une quelconque des revendications 11, 13 ou 14, sous forme d'une dispersion aqueuse, **caractérisée en ce que** le pH est de 2 à 6.

16. Silice stabilisée cationiquement selon l'une quelconque des revendications 11 ou 13 à 15, sous forme d'une dispersion aqueuse, **caractérisée en ce que** la conductibilité électrique est inférieure à 10 mS/cm.

17. Silice stabilisée cationiquement selon l'une quelconque des revendications 11 ou 13 à 16, sous forme d'une dispersion aqueuse, **caractérisée en ce que** la viscosité est inférieure à 1,5 Pa.s.

18. Silice stabilisée cationiquement selon l'une quelconque des revendications 11 à 17, **caractérisée en ce que** la grosseur moyenne des particules de silice n'est pas supérieure à 800 nm.

19. Silice stabilisée cationiquement selon l'une quelconque des revendications 11 à 18, **caractérisée en ce que** les particules de silice sont en outre modifiées à la surface avec au moins un autre silane sans groupe amino.

20. Silice stabilisée cationiquement selon l'une quelconque des revendications 11 ou 13 à 19, sous forme d'une dispersion aqueuse, **caractérisée en ce que** la dispersion contient en outre un liant organique et/ou un autre additif.

21. Utilisation de silice stabilisée cationiquement selon l'une quelconque des revendications 11 à 20 dans des enduits pour des moyens d'impression, en particulier pour le procédé par jet d'encre.

22. Utilisation de silice stabilisée cationiquement selon l'une quelconque des revendications 11 à 20 dans des compositions de revêtement pour le traitement de surface de substrats.

23. Utilisation de silice stabilisée cationiquement selon l'une quelconque des revendications 11 à 20 dans des agents de démoulage ou des abrasifs et des agents de polissage.

24. Utilisation de silice stabilisée cationiquement selon l'une quelconque des revendications 11 à 20 dans une laque de cataphorèse, une laque en poudre, un agent de traitement cationique de textiles ou un agent de nettoyage ou comme agent d'hydrophilisation, agent de filtration ou réactif de précipitation.
